# FASCICULE DE BREVET EUROPEEN

(11) **EP 0 538 090 B1**
(45) Date de publication et mention de la délivrance du brevet: **14.07.1999**
(21) Numéro de dépôt: 92402699.0
(22) Date de dépôt: 02.10.1992
(51) Int. Cl.: A01N 65/00

(54) **Procédé de traitement de produits dérivés de végétaux, notamment d'origine marine**
Verfahren zur Herstellung von Produkten aus Pflanzen, insbesondere maritimen Ursprungs
Process for treating plant-derived products, especially of marine-origin

(30) Priorité: 08.10.1991 FR 9112367
(43) Date de publication de la demande: 21.04.1993
(73) Titulaire: LABORATOIRES GOEMAR S.A., 35403 Saint-Malo (FR)
(72) Inventeur: Yvin, Jean-Claude, F-35400 Saint-Malo (FR); Chabot, René, F-85000 La Roche sur Yon (FR)
(74) Mandataire: Hubert, Philippe

(56) Documents cités:
- DATABASE WPIL Week 8551, 7 Novembre 1985 Derwent Publications Ltd., London, GB; AN 85-319798
- DATABASE WPIL Week 8941, 31 Août 1989 Derwent Publications Ltd., London, GB; AN 89-296575

## Description

La présente invention a pour objet un procédé d'obtention d'un extrait dérivé d'une algue ou d'une plante présentant une activité biologique améliorée.

Dans la présente description, et dans les revendications, on entend par produit dérivé d'une algue ou d'une plante, toute forme liquide résultant d'un traitement physique et/ou chimique et/ou enzymatique d'une algue ou d'une plante.

De tels produits sont connus dans l'état de la technique et ont notamment été utilisés dans les domaines cosmétique, diététique et surtout agricole, en raison de leur activité biologique. En particulier, dans le domaine agricole, ces produits sont connus comme biostimulants, c'est à dire qu'ils présentent la faculté de stimuler la croissance des plantes par application foliaire.

Dans le document JP-A-60222, on préconise l'utilisation de la polyvinylpyrrolidone en association avec un dérivé d'huile de ricin afin de favoriser la séparation des produits insolubles dans une solution aqueuse d'extraits de végétaux.

Dans le document JP-A-121850, on préconise l'utilisation de la polyvinylpyrrolidone pour l'élimination des tanins dans un procédé de préparation du thé.

Il a été découvert, et ceci constitue le fondement de la présente invention, qu'il est possible de potentialiser l'activité biologique des produits dérivés des algues ou des plantes, par traitement de ces produits en solution par de la polyvinylpyrrolidone.

Il a été en particulier constaté qu'un tel traitement a un effet tout à fait favorable en ce qui concerne la germination des semences et l'élongation cellulaire.

Ainsi, la présente invention vise à couvrir un procédé d'obtention d'un extrait dérivé d'une algue ou d'une plante présentant une activité biologique améliorée en ce qui concerne la germination des semences, l'élongation cellulaire ou la biostimulation, caractérisé en ce qu'il consiste :
a) à faire réagir, en solution, de la polyvinylpyrrolidone sur au moins un extrait dérivé de végétal, à une concentration comprise entre 0,1 et 50 g/l de solution, pendant un temps de réaction compris entre 1 et 90 minutes ;
b) à filtrer le mélange réactionnel ainsi obtenu, soit par ultra-filtration ou micro-filtration, soit sur un filtre à plaques horizontales.

Les produits dérivés de végétaux auxquels s'applique le procédé de traitement conforme à l'invention comprennent notamment :
- les extraits aqueux ou hydroalcooliques d'algues marines, notamment brunes ou rouges, en particulier du genre Ascophyllum ; de plantes, notamment les plantes aquatiques et en particulier les algues d'eau douce telles que les chlorelles ;
- les cryobroyats d'algues ou de plantes tels que ceux décrits dans le document FR 7435162.
- les cytofiltrats d'algues ou de plantes tels que ceux décrits dans le document EP 84900284.
- les hydrolysats d'algues tels que ceux décrits dans le document GB 664 989.

D'une façon générale, le procédé conforme à l'invention s'applique à tout extrait dérivé d'algue ou de plante, seul ou en mélange, résultant d'un traitement physique et/ou chimique et/ou enzymatique conduisant à une forme liquide.

Il a été découvert que les extraits dérivés d'algues ou plantes obtenus par le procédé décrit précédemment présentent une activité biologique sensiblement améliorée, notamment en ce qui concerne la germination des semences et l'élongation cellulaire (élongation du coléoptile de blé), et la biostimulation des végétaux.

Selon une caractéristique particulière du procédé conforme à l'invention, la polyvinylpyrrolidone est mise en réaction à une concentration comprise entre 0,5 et 10 g/l et encore de préférence à une concentration de 5 g/l.

Comme polyvinylpyrrolidone, on utilisera de préférence un homopolymère réticulé et insoluble de la N-vinyl-2-pyrrolidone comme par exemple le produit connu sous la dénomination commerciale Polyclar R commercialisé par la société GAF Corporation, ou encore le produit Polyclar AT commercialisé par cette même société.

Il est à noter que le procédé conforme à la présente invention est indépendant du pH et de la température.

D'une façon générale, la durée de la réaction entre la polyvinylpyrrolidone et l'extrait sera comprise entre environ 1 et 90 min.

Par ailleurs, l'étape de filtration b précitée sera généralement réalisée soit par ultrafiltration ou micro-filtration, soit sur un filtre à plaques horizontales.

La présente invention sera illustrée par les exemples non limitatifs suivants :
Dans ces exemples, l'expression "P.V.P" désigne la plyvinylpyrrolidone.

### EXEMPLE 1 : PREPARATION D'UN PRODUIT DERIVE DE L'EXTRAIT DE LA JACINTHE D'EAU

### Etape a)

On soumet des jacinthes d'eau fraîches cultivées selon le procédé décrit dans le brevet français 85 14055 à un cryobroyage à -40°C, suivant le brevet français n° 74 35162 ;
On obtient ainsi une crème dont le diamètre moyen des particules est inférieur à 20 µ.

### Etape b)

On rajoute à cette crème ainsi obtenue, sous agitation, un volume d'eau équivalent, et du mélange ainsi obtenu on sépare la phase solide de la phase liquide par centrifugation.

### Etape c)

La phase liquide ainsi obtenue correspond au produit utilisable et dénommé JE.

### EXEMPLE 2 : APPLICATION DU PROCEDE DE TRAITEMENT SELON L'INVENTION A L'EXTRAIT DE JACINTHE D'EAU

On traite un échantillon de jacinthe d'eau obtenu suivant le processus indiqué aux étapes a à c de l'exemple 1, par la PVP à la dose d'environ 1 %.

A cet effet, 100 g de PVP (produit commercialisé sous la marque Polyclar) sont introduits dans un volume de 3 l de jacinthe d'eau, préparée selon l'exemple n° 1.

On laisse la PVP sous agitation pendant environ 2 h

A la solution ainsi obtenue on additionne environ 7 l de solution de jacinthe préparée selon l'exemple 1 ;

Le mélange est maintenu sous agitation pendant 30 min, puis filtré sous vide sur un filtre Whatman GFA.

Le filtrat ainsi obtenu correspond au produit dénommé ci-après JEPVP.

L'activité des produits des exemples 1 et 2 a été mesurée selon l'expérience suivante :

### PROTOCOLE

On a utilisé ici un modèle végétal à croissance rapide : la laitue. Les mesures ont été effectuées sur les paramètres suivants :
poids frais, poids secs et nombre de feuilles.

L'essai est conduit en enceinte climatisée (température de 18°C) dans les conditions suivantes :
- Hygrométrie :: 70 %
- Photopériode :: - 14 h jour
- 10 h nuit

Des plantes de variété BARRY en provenance des Ets BRIAND sont repiquées dès le stade 4^{e} feuille, dans un substrat standard composé de 50 % de tourbe noire et 50 % de tourbe blonde, enrichi en engrais.

Les arrosages sont calculés en fonction du développement de la végétation.

L'essai est arrêté à la sortie de la 22^{e} feuille en moyenne.

Le protocole est réalisé pour étudier 4 concentrations de la solution Jacinthe d'Eau (JE) diluée dans de l'eau déminéralisée, et de façon identique pour le produit de l'invention (JEPVP).

Les produits obtenus seront désignés ci-après.

| | |
|---|---|
| JE1 et JEPVP1 | 1 ml/l |
| JE5 et JEPVP5 | 5 ml/l |
| JE10 et JEPVP10 | 10 ml/l |
| JE50 et JEPVP50 | 50 ml/l |

Les essais sont également réalisés sur un témoin constitué d'eau déminéralisée désigné JEO.

Chaque traitement est réalisé sur une base de 100 ml d'eau au m². (= 1 000 l/ha)

Chaque dose est testée sur 4 répétitions de 10 plantes chacune.

Trois traitements ont été réalisés au stade des 6^{e}, 13^{e} et 17^{e} feuille.

### RESULTATS

| Traitement | Concentration en ml/l | Poids frais moyen par plante (g) | Poids sec moyen par plante (g) | Nombre de feuilles moyen par plante |
|---|---|---|---|---|
| JEO | - | 27,60 | 1,24 | 19,10 |
| JE | 1 | 28,90 | 1,30 | 21,00 |
| | 5 | 31,70 | 1,44 | 21,70 |
| | 10 | 31,65 | 1,41 | 22,20 |
| | 50 | 29,70 | 1,32 | 21,60 |
| JEPVP | 1 | 30,06 | 1,36 | 21,50 |
| | 5 | 32,90 | 1,55 | 22,00 |
| | 10 | 33,62 | 1,47 | 22,40 |
| | 50 | 31,06 | 1,35 | 21,90 |

Les résultats obtenus et présentés dans le tableau (ci-dessus), mettent en évidence une potentialisation des effets de biostimulation de la plante test par l'extrait de jacinthe d'eau après le traitement à la PVP, et particulièrement pour les doses de 5 à 10 ml/l.

### EXEMPLE 3 : PREPARATION D'UN PRODUIT DERIVE D'UNE ALGUE MARINE DE TYPE ASCOPHYLLUM NODOSUM (LINNE LAMOUROUX)

### Etape a)

On soumet des algues fraîches de type Ascophyllum nodosum à un cryobroyage (à -40°C) suivant le procédé décrit dans le brevet français n° 7 435 162.

On obtient ainsi une crème d'algue dont le diamètre moyen des particules est inférieur à 20 µ.

### Etape b)

On rajoute à cette crème ainsi obtenue, un volume d'eau équivalent sous agitation ;
Ce mélange est soumis à une centrifugation pour séparer la phase solide de la phase liquide.

### Etape c)

Le produit liquide ainsi obtenu correspond au produit utilisable dénommé ci-après P1.

### EXEMPLE 4 : APPLICATION DU PROCEDE DE TRAITEMENT SELON L'INVENTION AU PRODUIT DE L'EXEMPLE 3

On traite un échantillon de produit P1 obtenu suivant le processus indiqué aux étapes a à c de l'exemple 1, par la PVP à la dose de 1 %.

A cet effet, 100 g de PVP (produit commercialisé sous la marque Polyclar), sont introduits dans un volume de 3 l de produit P1.

On laisse la PVP sous agitation pendant 2 h.

A la solution ainsi obtenue, on additionne environ 7 l de solution de produit P1.

Le mélange est maintenu sous agitation pendant 30 min, puis filtré sous vide sur un filtre Whatman GFA.

Le filtrat ainsi obtenu correspond au produit utilisable et dénommé ci-après P2.

L'activité des produits des exemples 3 et 4 a été mesurée selon les expériences suivantes :

### EXPERIENCE N° 1

### PROTOCOLE

L'expérience est conduite sur des graines de pois protéagineux de la variété BELINDA.

Chaque lot de graines est semé en terrine de 200 x 150 mm dans du sable fin lavé et séché des sablières de Bourron humidifié à 9 % de son poids.

### DISPOSITIF EXPERIMENTAL

Des lots de 50 graines sont semés dans chaque terrine, ces terrines sont ensuite enveloppées d'une poche en polyéthylène.

On place ces terrines pendant une durée de 10 j dans les conditions suivantes :
température à 19°C
Hygromètrie 80-90 %
arrosage toutes les 48 heures

La photopériode est assurée par éclairage artificiel réalisé au moyen de tubes fluorescents dès le 4^{e} jour, à raison de 16 h de jours et de 8 h de nuit.

Les essais sont également réalisés sur un témoin constitué d'eau déminéralisée dénommé ci-après PO.

### RESULTATS

| RESULTATS EXPERIMENTAUX SUR LA GERMINATION | | |
|---|---|---|
| Traitement | Concentration en ml/l | % germination |
| PO | - | 84 |
| | 1 | 90 |
| P1 | 2 | 78 |
| | 3 | 74 |
| | 1 | 94 |
| P2 | 2 | 90 |
| | 3 | 76 |

Les résultats obtenus et présentés dans le tableau ci-dessus mettent en évidence l'effet de potentialisation des effets de l'extrait d'Ascophyllum après traitement à la PVP sur le pourcentage de germination, particulièrement à la dose de 2 ml/l.

### EXPERIENCE N° 2

### TEST D'ELONGATION DU COLEOPTILE DE BLE

### Méthode

Les graines de blé sont mises à germer à 25°C en obscurité.

Au bout de 3 jours, les coléoptiles atteignent 2,5 mm à 3 mm de longueur : après l'excision des coléoptiles, des segments de 8 mm de longueur sont découpés.

Dans le cadre de cette expérience, et pour chaque dose d'extrait d'algue obtenue suivant les exemples 3 et 4, deux lots de 10 fragments de 10 coléoptiles chacun sont mis en présence de 5 ml de solution aqueuse contenant l'extrait à tester, dans des boîtes de Petri de 5 cm de diamètre. L'élongation est mesurée après 20 h d'incubation en obscurité à 25°C, les résultats décrits dans le tableau suivant portant sur 3 répétitions.

| RESULTATS EXPERIMENTAUX SUR L'ELONGATION | | |
|---|---|---|
| Traitement | Concentration exprimée en µg/ml | Elongation moyenne exprimée en mm |
| PO | - | 9,55 |
| P1 | 2 | 9,90 |
| | 4 | 10,78 |
| | 8 | 10,67 |
| P2 | 2 | 11,30 |
| | 4 | 11,64 |
| | 8 | 10,00 |

Les résultats obtenus et présentés dans le tableau ci-dessus mettent en évidence une potentialisation des effets de l'extrait d'Ascophyllum, après traitement à la PVP, sur l'élongation cellulaire particulièrement aux doses de 4 µg/ml.

## Revendications

1. Procédé d'obtention d'un extrait dérivé d'une algue ou d'une plante présentant une activité biologique améliorée en ce qui concerne la germination des semences, l'élongation cellulaire ou la biostimulation, caractérisé en ce qu'il consiste :
a) à faire réagir, en solution, de la polyvinylpyrrolidone sur au moins un extrait dérivé de végétal, à une concentration comprise entre 0,1 et 50 g/l de solution, pendant un temps de réaction compris entre 1 et 90 minutes ;
b) à filtrer le mélange réactionnel ainsi obtenu, soit par ultra-filtration ou micro-filtration, soit sur un filtre à plaques horizontales.

2. Procédé selon la revendication 1, caractérisé en ce que la polyvinylpyrrolidone précitée est mise en réaction à une concentration comprise entre 0,5 et 10 g/l, et de préférence à une concentration de 5 g/l.

3. Procédé selon la revendication 1 ou 2, caractérisé en ce que l'extrait précité est un extrait d'algues.

4. Procédé selon l'une des revendications 1 à 2, caractérisé en ce que l'extrait précité est un cryobroyat d'algues, notamment de type Ascophyllum nodosum.

5. Procédé selon la revendication 1 ou 2, caractérisé en ce que l'extrait précité est un cryobroyat de jacinthes d'eau.

## Claims

1. A method of obtaining an extract, derived from an alga or from a plant, having an improved biological activity with regard to seed germination, cell elongation or biostimulation, characterised in that it consists :
a) in allowing polyvinylpyrrolidone to react, in solution, with at least one vegetable-derived extract, at a concentration of between 0.1 and 50 g/l of solution, for a reaction time of between 1 and 90 minutes ; and
b) in filtering the reaction mixture thus obtained, either by ultrafiltration or microfiltration, or on a horizontal plate filter.

2. The method according to claim 1, characterised in that the above-mentioned polyvinylpyrrolidone is reacted at a concentration of between 0.5 and 10 g/l, and preferably at a concentration of 5 g/l.

3. The method according to claim 1 or 2, characterised in that the above-mentioned extract is an extract from algae.

4. The method according to one of claims 1 to 2, characterised in that the above-mentioned extract is a cryogrinding of algae, especially algae of the type *Ascophyllum nodosum*.

5. The method according to claim 1 or 2, characterised in that the above-mentioned extract is a cryogrinding of water hyacinths.

## Patentansprüche

1. Verfahren zur Entwicklung eines Algen- oder Pflanzenextrakts der im Hinblick auf die Samenkeimung, die Zellenverlängerung oder die Biostimulation, eine verbesserte biologische Aktivität aufweist, dadurch **gekennzeichnet,**
daß man :
a) Polyvinylpyrrolidon in Lösung mit mindestens einem Ektrakt aus Pflanzenderivat in einer Lösungskonzentration zwischen 0,1 und 50 g/l, während einer Zeitdauer der Reaktion zwischen 1 und 90 min., reagieren läßt;
b) das so erhaltene Reaktionsgemisch durch Ultrafiltration oder Mikrofiltration oder auf einem Filter mit horizontalen Platten durchführt.

2. Verfahren nach Anspruch 1, dadurch **gekennzeichnet**, daß man das vorgenannte Polyvinylpyrrolidon mit einer Konzentration zwischen 0,5 und 10 g/l und, mehr bevorzugt, mit einer Konzentration von 5 g/l reagiern läßt.

3. Verfahren nach Anspruch 1 oder 2, dadurch **gekennzeichnet**, daß der vorgenannte Extrakt ein Algenextrakt ist.

4. Verfahren nach Anspruch 1 oder 2, dadurch **gekennzeichnet,** daß der vorgenannte Extrakt eine Kryozerkleinerung von Algen ist, besonders vom Typ Ascophyllum nodosum.

5. Verfahren nach Anspruch 1 oder 2, dadurch **gekennzeichnet,** daß der vorgennante Extrakt eine Kryozerkleinerung von Wasserhyazinthen ist.
